# EUROPÄISCHE PATENTSCHRIFT

(11) **EP 3 842 297 B1**
(45) Veröffentlichungstag und Bekanntmachung des Hinweises auf die Patenterteilung: **19.07.2023**
(21) Anmeldenummer: 21152915.1
(22) Anmeldetag: 28.10.2019
(51) Int. Cl.: B60R 21/203

(54) **LENKUNGSBAUGRUPPE SOWIE VERFAHREN ZUR MONTAGE EINES GASSACKMODULS AN EINEM LENKRAD ZUR BILDUNG EINER SOLCHEN LENKUNGSBAUGRUPPE**
STEERING ASSEMBLY AND METHOD FOR MOUNTING AN AIRBAG MODULE TO THIS STEERING ASSEMBLY
VOLANT DE DIRECTION MUNI D'UN MODULE DE COUSSIN GONFLABLE ET PROCÉDÉ DE MONTAGE DUDIT MODULE DE COUSSIN GONFLABLE

(30) Priorität: 06.11.2018 DE 102018127637
(43) Veröffentlichungstag der Anmeldung: 30.06.2021
(62) Teilanmeldung aus: 19205585.3
(73) Patentinhaber: ZF Automotive Safety Germany GmbH, 63743 Aschaffenburg (DE)
(72) Erfinder: FUNK, André, 63743 Aschaffenburg (DE); FRIESS, Marc, 63849 Leidersbach (DE); HAAS, Markus, 64760 Oberzent (DE)
(74) Vertreter: ZF Patentabteilung - DIPS

(56) Entgegenhaltungen:
- DE-C2- 19 522 313
- US-A- 5 730 459

## Beschreibung

Die Erfindung betrifft eine Lenkungsbaugruppe für eine Fahrzeuglenkung sowie ein Verfahren zur Montage eines Gassackmoduls an einem Lenkrad zur Bildung einer solchen Lenkungsbaugruppe.

Frontgassackmodule zur Rückhaltung von Fahrzeuginsassen sind fahrerseitig meist im Nabenbereich des Lenkrads angeordnet, sodass sich ein Gassack bei der Modulaktivierung nach einem Fahrzeugaufprall vor dem Fahrzeuginsassen entfaltet und diesen schützt.

Die DE 195 22 313 C2 offenbart eine gattungsgemäße Lenkungsbaugruppe, die ein Gassackmodul mit einem Airbaghalter und einem am Airbaghalter befestigten Abdeckpolster aufweist, wobei eine Seitenwand des Airbaghalters eine Klaue umfasst, die an einem freien Klauenende einen Eingriffsvorsprung aufweist. Ferner ist in einer Seitenwand des Abdeckpolsters eine Öffnung und eine benachbarte Eingriffsvertiefung vorgesehen, wobei die Klaue eingesetzt in eine zugeordnete Öffnung der Polsterseitenwand mit dieser in Eingriff steht, und wobei der an der Klaue ausgebildete Eingriffsvorsprung mit der Eingriffsvertiefung in Eingriff steht.

Mit Blick auf das Montageverfahren eines Gassackmoduls wird üblicherweise zunächst das Lenkrad ohne Gassackmodul an der Lenksäule befestigt und anschließend das Gassackmodul mit der Lenkradnabe verbunden, insbesondere verrastet. Eine Verrastung ermöglicht in vorteilhafter Weise eine einfache, zuverlässige und äußerst schnelle Montage des Gassackmoduls, ohne dass Werkzeuge benötigt werden.

Um bei herkömmlichen Lenkungsbaugruppen eine sichere Modulverrastung zu gewährleisten, wird das Gassackmodul bei der Montage "überdrückt", das heißt in Montagerichtung über seine Sollposition hinaus verschoben bis die Verrastung erfolgt und dann anschließend wieder in die Sollposition zurückgestellt.

Ein solches Überdrücken des Gassackmoduls ist dann problemlos möglich, wenn die Spalte zwischen einer Modulkappe des Gassackmoduls und einem umgebenden Bauteil, insbesondere einer Lenkradverkleidung, hinreichend groß ist. Es gibt allerdings Bestrebungen, die Spaltmaße in der Endposition des Gassackmoduls zu minimieren und Spaltbreiten von deutlich unter 1 mm zu realisieren. In vielen Fällen ist bei derart geringen Spaltmaßen ein Überdrücken nicht mehr oder nur bei unerwünschter Verformung der Modulkappe und/oder der angrenzenden Lenkradverkleidung möglich.

Aufgabe der Erfindung ist die Schaffung eines Gassackmoduls, das bei der Modulmontage ohne ein Überdrücken der Modulkappe sicher am Lenkrad verrastet, sowie einer Lenkungsbaugruppe, die besonders geringe Spaltmaße zwischen der Modulkappe des Gassackmoduls und einer angrenzenden Lenkradverkleidung aufweisen kann.

Erfindungsgemäß wird diese Aufgabe gelöst durch eine Lenkungsbaugruppe mit den Merkmalen des Anspruchs 1.

In seiner Vormontageposition weist das Gassackmodul eine größere axiale Abmessung auf als in seiner Endmontageposition. Durch die Widerstandskonturen lässt sich das in der Vormontageposition befindliche Gassackmodul bereits sicher am Lenkrad verrasten. Aufgrund der größeren axialen Modulabmessung in der Vormontageposition wird die Modulkappe während der Modulverrastung nie über ihre axiale Sollposition hinausbewegt. Erst nach der Modulmontage am Lenkrad wird das Gassackmodul von der Vormontageposition in die Endmontageposition bewegt. Die Modulkappe erreicht erst in der Endmontageposition des Gassackmoduls ihre Sollposition, in der die Spaltmaße zwischen der Modulkappe und den umgebenden Lenkradbauteilen äußerst gering sein können und beispielsweise in der Größenordnung von 0,5 mm liegen.

Die Modulkappe und der Modulboden können in der Endmontageposition des Gassackmoduls relativ zueinander ein axiales und radiales Spiel aufweisen. Dieses Spiel erlaubt geringe Bewegungen zwischen der Modulkappe einerseits und dem Modulboden bzw. aller am Modulboden befestigten Modulbauteile wie Gasgenerator und Gassack andererseits. Folglich kann die Modulkappe aufgrund ihrer geringen Spaltmaße oder einer gesonderten Lenkradbefestigung weitgehend unbeweglich am Lenkrad fixiert sein, während das übrige Gassackmodul zur Minimierung unerwünschter Lenkradvibrationen als Schwingungstilger einsetzbar ist.

Die Widerstandskonturen sind vorzugsweise Rastkonturen sind, welche die Modulkappe und den Modulboden in der Endmontageposition verrasten.

Gemäß einer Ausführungsform der Lenkungsbaugruppe ist die Modulkappe des Gassackmoduls topfförmig ausgebildet und weist eine axiale Stirnwand sowie eine Umfangswand auf, wobei die Widerstandskonturen als axial verlaufender Schlitz in der Umfangswand der Modulkappe und als radialer Zapfen am Modulboden ausgebildet sind.

In axialer Richtung gesehen kann der Schlitz zumindest abschnittsweise eine tangentiale Schlitzbreite aufweisen, die kleiner ist als die maximale tangentiale Abmessung des radialen Zapfens. Dadurch lässt sich auf einfache Weise ein gewünschter Montagewiderstand einstellen. Dieser Montagewiderstand wird durch Verformung, insbesondere elastische Verformung, der Schlitzränder und/oder des radialen Zapfens überwunden. Folglich ist der radiale Zapfen und/oder die Umfangswand der Modulkappe zumindest im Bereich des Schlitzes vorzugsweise aus einem nachgiebigen, insbesondere einem elastisch nachgiebigen Material hergestellt.

Besonders bevorzugt ist die Schlitzbreite an einem von der axialen Stirnwand abgewandten Ende der Umfangswand geringer als die maximale tangentiale Abmessung des radialen Zapfens und nimmt in Richtung zur axialen Stirnwand hin zu, bis sie größer ist als die maximale tangentiale Abmessung des radialen Zapfens. Dadurch lässt sich zwischen der Modulkappe und dem Modulboden mit geringem Aufwand ein axiales und radiales Spiel in der Endmontageposition des Gassackmoduls realisieren. Wie bereits oben erwähnt, erlaubt dieses Spiel eine vorteilhafte Schwingungstilgung in der Fahrzeuglenkung.

Die Modulkappe des Gassackmoduls kann ein Befestigungsmittel aufweisen, welches die Modulkappe in der Endmontagestellung des Gassackmoduls direkt mit dem Lenkrad verbindet. Dieses Befestigungsmittel sorgt quer zur Montageachse für eine weitgehend spielfreie Verbindung zwischen Modulkappe und Lenkrad, wodurch sich nicht nur ein geringes, sondern auch ein besonders gleichmäßiges Spaltmaß realisieren lässt. In axialer Richtung kann das Befestigungsmittel ebenfalls für eine weitgehend spielfreie Verbindung sorgen oder alternativ eine begrenzte axiale Relativbewegung zwischen Modulkappe und Lenkrad erlauben, beispielsweise zur Hupenbetätigung.

Gemäß einer Ausführungsform der Lenkungsbaugruppe ist die Montageplatte als separates Bauteil axial zwischen dem Gassackmodul und dem Lenkradskelett angeordnet. Die Montageplatte ist in diesem Fall vorzugsweise schwingfähig am Lenkradskelett befestigt, wodurch sich in der Fahrzeuglenkung eine vorteilhafte Schwingungstilgung, das heißt eine Minimierung unerwünschter Lenkradvibrationen erzielen lässt.

In alternativen Ausführungsvarianten kann die Montageplatte einstückig in das Lenkradskelett integriert sein.

Schließlich betrifft die Erfindung auch ein Verfahren zur Montage eines Gassackmoduls an einem Lenkrad zur Bildung einer oben beschriebenen Lenkungsbaugruppe, wobei das Verfahren folgende Schritte umfasst:
a) Bereitstellen des Gassackmoduls in seiner axialen Vormontageposition;
b) Bereitstellen eines Lenkrads mit einem Lenkradskelett und einer am Lenkradskelett befestigten Montageplatte für das Gassackmodul;
c) Zuführen des Gassackmoduls entlang der Montageachse in Richtung zum Lenkradskelett; und
d) Aufbringen eines axialen Montagedrucks auf die Modulkappe des Gassackmoduls, wodurch zunächst die Rastmittel des Gassackmoduls und der Montageplatte eine Rastverbindung ausbilden und erst danach das Gassackmodul von seiner Vormontageposition in seine Endmontageposition überführt wird.

Dieses Montageverfahren ermöglicht eine sichere und zuverlässige Verrastung des Gassackmoduls an der Montageplatte bzw. am Lenkrad, ohne dass die Modulkappe während der Montage axial über ihre letztendlich angestrebte Sollposition hinausbewegt wird.

Gemäß einer Verfahrensvariante wird die Montageplatte im Schritt b) über Schwingungsdämpfer am Lenkradskelett befestigt, sodass die Montageplatte und das Lenkradskelett schwingfähig verbunden sind. Dadurch lässt sich das Gassackmodul, unter Umständen mit Ausnahme der Modulkappe, in vorteilhafter Weise als Schwingungsdämpfer zur Reduktion von Lenkradschwingungen einsetzen.

Ferner kann die Modulkappe beim Überführen des Gassackmoduls von der Vormontageposition in die Endmontageposition im Schritt d) gleichzeitig auch direkt am Lenkrad fixiert, insbesondere mit dem Lenkrad verrastet werden. Dadurch lässt sich mit geringem Aufwand ein besonders gleichmäßiges Spaltmaß zwischen der Modulkappe und einem angrenzenden Lenkradbauteil realisieren.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine perspektivische Ansicht einer erfindungsgemäßen Lenkungsbaugruppe mit einem erfindungsgemäßen Gassackmodul und einer Montageplatte;
- Figur 2 eine axiale Draufsicht auf die Montageplatte der Lenkungsbaugruppe gemäß Figur 1;
- Figur 3 eine perspektivische Detailansicht der Lenkungsbaugruppe gemäß Figur 1 bei der Montage des Gassackmoduls an der Montageplatte;
- Figur 4 die perspektivische Detailansicht gemäß Figur 3 kurz vor der Verrastung zwischen dem Gassackmodul und der Montageplatte;
- Figur 5 die perspektivische Detailansicht gemäß Figur 3 nach der Verrastung zwischen dem Gassackmodul und der Montageplatte;
- Figur 6 eine perspektivische Ansicht eines erfindungsgemäßen Gassackmoduls in seiner Vormontageposition vor der Verrastung mit einer Montageplatte;
- Figur 7 die perspektivische Ansicht des Gassackmoduls gemäß Figur 6 in seiner Vormontageposition nach der Verrastung mit der Montageplatte;
- Figur 8 die perspektivische Ansicht des Gassackmoduls gemäß Figur 6 in seiner Endmontageposition nach der Verrastung mit der Montageplatte; und
- Figur 9 eine perspektivische Explosionsansicht einer erfindungsgemäßen Lenkungsbaugruppe.

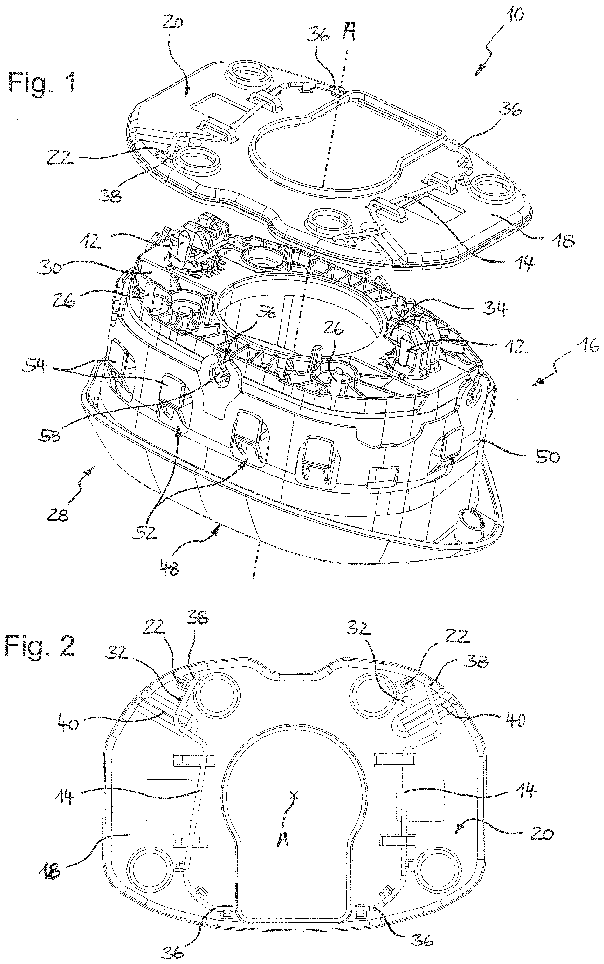

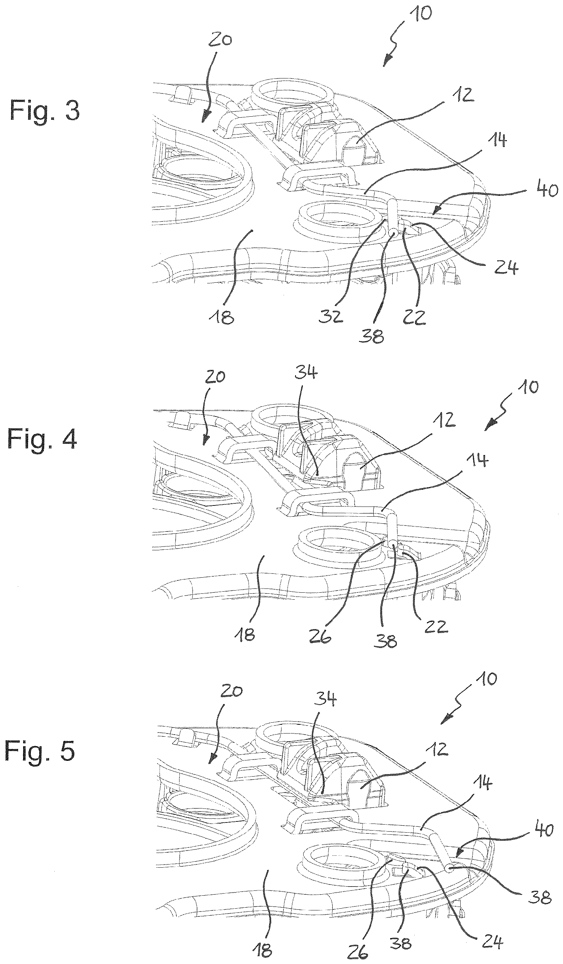

Die Figuren 1 bis 9 zeigen eine Lenkungsbaugruppe 10 für eine Fahrzeuglenkung, mit einem ersten Kopplungsbauteil, das einen starren Rasthaken 12 aufweist, und einem zweiten Kopplungsbauteil, das ein vormontiertes Federelement 14 aufweist, wobei die beiden Kopplungsbauteile entlang einer Montageachse A aufeinander zu bewegbar sind, bis ein Abschnitt des Federelements 14 den wenigstens einen Rasthaken 12 in einer Befestigungsposition hintergreift und die Kopplungsbauteile miteinander verbindet (siehe Figur 5).

Im vorliegenden Ausführungsbeispiel ist das erste Kopplungsbauteil ein Gassackmodul 16 und das zweite Kopplungsbauteil eine Montageplatte 18.

Für den Fachmann ist natürlich ohne Weiteres ersichtlich, dass alternativ auch die Montageplatte 18 den Rasthaken 12 und das Gassackmodul 16 das vormontierte Federelement 14 aufweisen könnte. In diesem Fall wäre folglich die Montageplatte 18 das erste Kopplungsbauteil und das Gassackmodul 16 das zweite Kopplungsbauteil. Das generelle, nachfolgend beschriebene Verbindungskonzept ist analog auch auf eine solche Ausführungsvariante problemlos übertragbar.

Anhand der Figuren 1 und 2 wird deutlich, dass im vorliegenden Ausführungsbeispiel zwei starre Rasthaken 12 sowie zwei separate Federelemente 14 vorgesehen sind, wobei jedem Rasthaken 12 ein Federelement 14 zugeordnet ist. Alternativ können die beiden Federelemente 14 auch einstückig ausgeführt sein, beispielsweise als U-förmige Feder, wobei jedem Rasthaken 12 dann jeweils ein beweglicher Federschenkel zugeordnet wäre. Generell sind auch Ausführungsvarianten denkbar, bei denen eine andere Anzahl von Rasthaken 12 vorgesehen ist.

Die Federelemente 14 sind gemäß Figur 1 auf einer vom Gassackmodul 16 abgewandten axialen Stirnseite 20 der Montageplatte 18 angeordnet.

Jedes Federelement 14 ist bewegbar zwischen einer Kopplungsstellung, in der das Federelement 14 weitgehend entspannt ist und den wenigstens einen Rasthaken 12 hintergreifen kann (vgl. Figur 2, rechtes Federelement 14), sowie einer Entkopplungsstellung, in der das Federelement 14 gespannt ist und quer zur Montageachse A vom Rasthaken 12 beabstandet ist (vgl. Figur 2, linkes Federelement 14).

Die Montageplatte 18 weist ein Halteelement 22 zum Fixieren des Federelements 14 in der Entkopplungsstellung auf, wobei das Halteelement 22 in der dargestellten Ausführungsform ein einstückig mit der Montageplatte 18 ausgebildeter Vorsprung ist, der axial von der Stirnseite 20 der Montageplatte 18 absteht.

Konkret ist dieser Vorsprung als Rampe ausgeführt, wobei eine Rampenschräge 24 in der Kopplungsstellung des Federelements 14 dem Federelement 14 zugewandt (Figur 5) und in der Entkopplungsstellung des Federelements 14 vom Federelement 14 abgewandt ist (Figur 3).

Um das Federelement 14 aus seiner gespannten Entkopplungsstellung zu lösen, weist das Gassackmodul 16 ein vom Rasthaken 12 beabstandetes Betätigungselement 26 auf.

Gemäß Figur 1 umfasst das Gassackmodul 16 unter anderem eine Modulkappe 28, die im eingebauten Zustand des Gassackmoduls 16 einem Insassen zugewandt ist, und einen Modulboden 30, der die Rasthaken 12 zur Befestigung des Gassackmoduls 16 an einem Fahrzeugbauteil, insbesondere an einem Fahrzeuglenkrad aufweist. Das Betätigungselement 26 ist in diesem Fall als stiftartiger Vorsprung ausgebildet, der sich von einer der Montageplatte 18 zugewandten Seite des Modulbodens 30 axial in Richtung zur Montageplatte 18 erstreckt und in der Entkopplungsstellung des Federelements 14 axial mit einem Abschnitt des Federelements 14 fluchtet.

Der Modulboden 30 ist hier als Spritzgussteil aus einem robusten Kunststoff gefertigt, wobei das Betätigungselement 26 insbesondere einstückig an den Modulboden 30 angeformt ist.

Die Montageplatte 18 weist gemäß Figur 2 eine axiale Durchgangsöffnung 32 auf, die mit dem Betätigungselement 26 axial fluchtet, wobei sich das Betätigungselement 26 zum Lösen des Federelements 14 aus seiner gespannten Entkopplungsstellung durch diese Durchgangsöffnung 32 erstreckt.

Im Folgenden wird anhand der Figuren 3 bis 5 kurz der Montagevorgang des Gassackmoduls 16 an der Montageplatte 18 erläutert.

Zu Beginn des Montagevorgangs befindet sich das an der Montageplatte 18 vormontierte Federelement 14 in seiner gespannten Entkopplungsstellung, in der das Federelement 14 quer zur Montageachse A vom Rasthaken 12 beabstandet ist. Gemäß Figur 3 kann sich der Rasthaken 12 folglich beim axialen Zuführen des Gassackmoduls 16 ungehindert seitlich am Federelement 14 vorbeibewegen, ohne das Federelement 14 axial oder radial zu beaufschlagen.

Wird gemäß Figur 4 eine axiale Relativposition erreicht, in der eine Rastnase 34 des Rasthakens 12 das Federelement 14 passiert hat, gelangt das stiftförmige Betätigungselement 26 in Kontakt mit dem Federelement 14 und beaufschlagt das Federelement 14 in axialer Richtung. Das Federelement 14 gleitet dadurch am Halteelement 22 entlang, bis es radial nach außen in seine Kopplungsstellung schnappt.

In der Kopplungsstellung gemäß Figur 5 hintergreift das Federelement 14 den Rasthaken 12, konkret die Rastnase 34 des Rasthakens 12, sodass das Gassackmodul und die Montageplatte miteinander gekoppelt und relativ zueinander in einer axialen Befestigungsposition fixiert sind. Verglichen mit der Entkopplungsstellung ist das Federelement 14 in der Kopplungsstellung entspannt, wobei jedoch auch in der Kopplungsstellung noch eine gewisse Restspannung vorgesehen sein kann.

Damit ist die Montage des Gassackmoduls 16 an der Montageplatte 18 abgeschlossen.

Anhand der Figur 2 ist gut zu erkennen, dass das Federelement 14 ein an der Montageplatte 18 fixiertes, festes Federende 36 und ein radial bewegbares, freies Federende 38 aufweist. Im Bereich des freien Federendes 38 ist auf der Stirnseite 20 der Montageplatte 18 eine Demontagenut 40 zur Demontage des Gassackmoduls 16 vorgesehen. Diese Demontagenut 40 erstreckt sich im Wesentlichen in radialer Richtung und ist auch in einem am Fahrzeuglenkrad montierten Zustand des Gassackmoduls 16 durch ein Werkzeug von außerhalb des Lenkrads zugänglich. Das Werkzeug lässt sich dann radial in die Demontagenut 40 einführen und kann das Federelement 14 zurück in seine Entkopplungsposition gemäß Figur 3 bewegen, sodass sich das Gassackmodul 16 in axialer Richtung wieder problemlos von der Montageplatte 18 entfernen lässt.

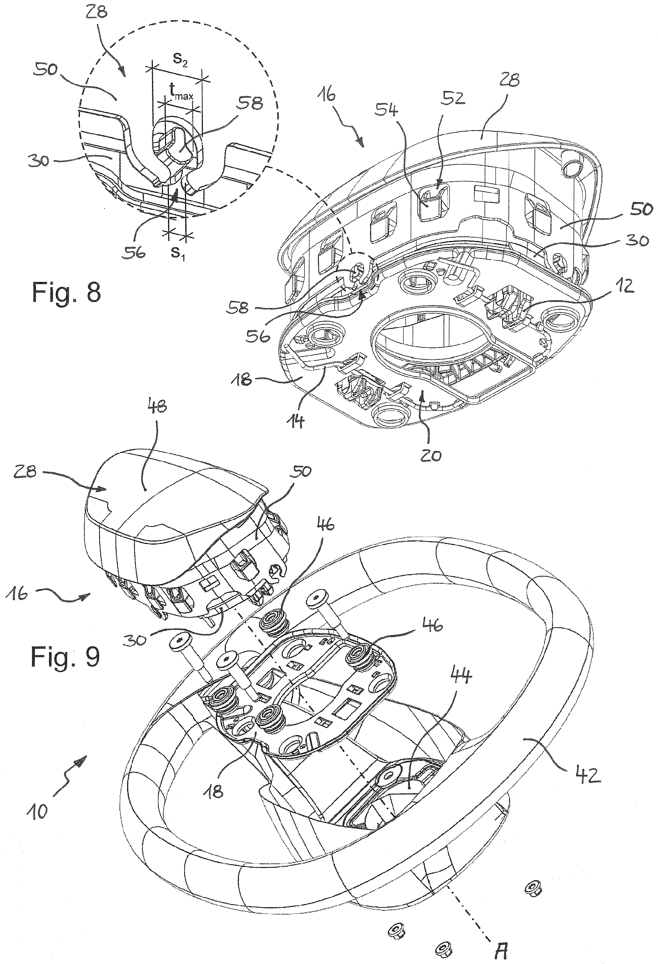

Die Lenkungsbaugruppe 10 umfasst gemäß Figur 9 auch ein Lenkrad 42 mit einem Lenkradskelett 44, wobei die Montageplatte 18 als separates Bauteil axial zwischen dem Gassackmodul 16 und dem Lenkradskelett 44 angeordnet ist.

Im dargestellten Ausführungsbeispiel der Lenkungsbaugruppe 10 ist die Montageplatte 18 über Schwingungsdämpfer 46 am Lenkradskelett 44 befestigt, sodass die Montageplatte 18 und das Lenkradskelett 44 schwingfähig verbunden sind.

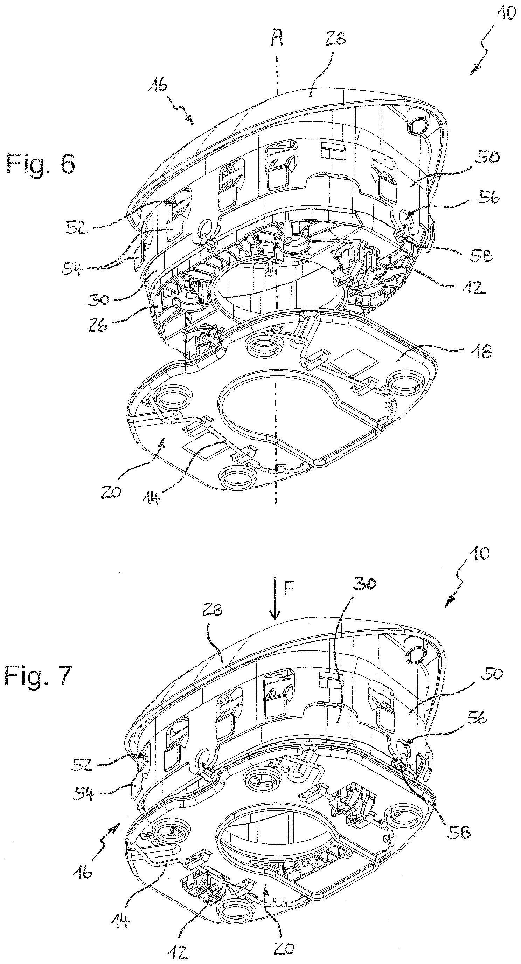

Die Figuren 6 bis 8 zeigen perspektivische Ansichten der Lenkungsbaugruppe 10, anhand derer im Folgenden Besonderheiten des Gassackmoduls 16 für ein Insassenrückhaltesystem erläutert werden.

Das Gassackmodul 16 umfasst gemäß den Figuren 6 bis 8 die Modulkappe 28, die im eingebauten Zustand des Gassackmoduls 16 einem Insassen zugewandt ist, und den Modulboden 30, der ein als Rasthaken 12 ausgeführtes Rastmittel zur Befestigung des Gassackmoduls 16 an einem Fahrzeugbauteil, insbesondere an einer Montageplatte 18 oder einem Fahrzeuglenkrad aufweist.

Die Modulkappe 28 und der Modulboden 30 sind entlang einer Montageachse A aufeinander zu bewegbar, bis sie zunächst eine axiale Vormontageposition (Figuren 6 und 7) und dann eine axiale Endmontageposition (Figur 8) erreichen, wobei die Modulkappe 28 und der Modulboden 30 zusammenwirkende Vorfixierelemente aufweisen, welche die Modulkappe 28 und den Modulboden 30 in der Vormontageposition unverlierbar aneinander befestigen.

Die Modulkappe 28 ist im vorliegenden Ausführungsbeispiel topfförmig ausgebildet und weist eine axiale Stirnwand 48 sowie eine Umfangswand 50 auf. Als Vorfixierelemente sind in der Umfangswand 50 der Modulkappe 28 mehrere Vormontagefenster 52 und am Modulboden 30 mehrere Vormontagehaken 54 vorgesehen, welche jeweils in ein zugeordnetes Vormontagefenster 52 eingreifen und somit die Modulkappe 28 und den Modulboden 30 in der Vormontageposition des Gassackmoduls 16 unverlierbar verbinden. Auf diese Weise bildet das Gassackmodul 16 in seiner Vormontageposition eine Baueinheit, die problemlos transportiert und weiterverarbeitet werden kann. Die Vorfixierelemente sorgen jedoch nicht für eine starre, spielfreie Verbindung, sondern erlauben sowohl in axialer Richtung als auch in radialer Richtung eine gewisse Relativbewegung zwischen der Modulkappe 28 und dem Modulboden 30.

Abgesehen von den Vorfixierelementen weisen die Modulkappe 28 und der Modulboden 30 ferner zusammenwirkende Widerstandskonturen auf, welche bei einer axialen Relativbewegung der Modulkappe 28 und des Modulbodens 30 von der Vormontageposition in die Endmontageposition einen vorbestimmten Montagewiderstand aufweisen.

Die Widerstandskonturen sind in der dargestellten Ausführungsform insbesondere Rastkonturen, welche die Modulkappe 28 und den Modulboden 30 in der Endmontageposition verrasten.

Konkret sind die Widerstandskonturen als axial verlaufender Schlitz 56 in der Umfangswand 50 der Modulkappe 28 an einem von der Stirnwand 48 abgewandten axialen Ende und als radialer Zapfen 58 am Modulboden 30 ausgebildet.

Der Schlitz 56 weist in axialer Richtung gesehen zumindest abschnittsweise eine tangentiale Schlitzbreite s auf, die kleiner ist als eine maximale tangentiale Abmessung tₘₐₓ des radialen Zapfens 58. Dadurch entsteht der Montagewiderstand bei einer Bewegung von der Vormontageposition in die Endmontageposition.

Insbesondere weist der Schlitz 56 an einem von der axialen Stirnwand 48 abgewandten Ende der Umfangswand 50 eine erste Schlitzbreite s₁ auf, die geringer ist als die maximale tangentiale Abmessung tₘₐₓ des radialen Zapfens 58, wobei die Schlitzbreite s dann in Richtung zur axialen Stirnwand 48 hin zunimmt, bis sie eine zweite Schlitzbreite s₂ erreicht, die größer als die maximale tangentiale Abmessung tₘₐₓ des radialen Zapfens 58 ist.

Anhand des Detailausschnitts zu Figur 10 wird deutlich, dass der radiale Zapfen 58 in der dargestellten Endmontageposition des Gassackmoduls 16 quer zur Radialrichtung von den Rändern des Schlitzes 56 beabstandet ist.

Folglich wird in der Endmontageposition des Gassackmoduls 16 eine Relativbewegung zwischen der Modulkappe 28 und dem Modulboden 30 durch die Widerstandkonturen nicht behindert, sodass die Modulkappe 28 und der Modulboden 30 auch in der Endmontageposition relativ zueinander ein axiales und radiales Spiel aufweisen.

Der radiale Zapfen 58 und/oder die Umfangswand 50 der Modulkappe 28 ist zumindest im Bereich des Schlitzes 56 aus einem nachgiebigen, insbesondere einem elastisch nachgiebigen Material hergestellt, vorzugsweise aus einem geeigneten Kunststoff.

Über Parameter wie das Material des Zapfens 58 und/oder der Umfangswand 50, eine Wandstärke der Umfangswand 50 im Bereich des Schlitzes 56 sowie das Verhältnis zwischen minimaler Schlitzbreite und maximaler tangentialer Abmessung des Zapfens 58 lässt sich ein gewünschter Montagewiderstand einfach und präzise einstellen.

Das beschriebene Gassackmodul 16 für ein Insassenrückhaltesystem bildet zusammen mit dem Lenkrad 42, welches ein Lenkradskelett 44 aufweist, und der lenkradseitig angeordneten Montageplatte 18 zur Befestigung des Gassackmoduls 16 am Lenkradskelett 44 eine Lenkungsbaugruppe 10 für eine Fahrzeuglenkung. Dabei ist das Rastmittel (Rasthaken 12) am Modulboden 30 des Gassackmoduls 16 ein erstes Rastmittel, welches bei einer axialen Bewegung des Gassackmoduls 16 relativ zur Montageplatte 18 mit einem an der Montageplatte 18 vorgesehenen zweiten Rastmittel (Federelement 14) verrastet, wobei ein Montagewiderstand zum Verrasten der ersten und zweiten Rastmittel geringer ist als ein Montagewiderstand der Widerstandskonturen beim Überführen des Gassackmoduls 16 von der Vormontagestellung in die Endmontagestellung. Dies ist im Montagestadium gemäß Figur 7 veranschaulicht, wo sich das Gassackmodul 16 noch in seiner Vormontagestellung befindet, die Verrastung des Gassackmoduls 16 mit der Montageplatte 18 jedoch bereits erfolgt ist. Dies lässt sich besonders dann gut realisieren, wenn sich das Gassackmodul 16 mit geringem Montagewiderstand an der Montageplatte 18 verrasten lässt, also beispielsweise durch eine Verrastung wie sie oben insbesondere anhand der Figuren 3 bis 5 beschrieben wurde.

Gemäß Figur 9 ist die Montageplatte 18 als separates Bauteil axial zwischen dem Gassackmodul 16 und dem Lenkradskelett 44 des Lenkrads 42 angeordnet und über Schwingungsdämpfer 46 schwingfähig am Lenkradskelett 44 befestigt.

Aufgrund des Spiels zwischen der Modulkappe 28 und dem Modulboden 30 in der Endmontageposition des Gassackmoduls 16 kann die Modulkappe folglich mit minimalem Spaltmaß äußerst passgenau und im Wesentlichen unbeweglich im Lenkrad 42 aufgenommen sein, während das übrige Gassackmodul 16 mitsamt der Montageplatte 18 relativ zum Lenkrad 42 begrenzt beweglich ist und somit in vorteilhafter Weise als Schwingungstilger fungieren und unerwünschte Vibrationen in der Fahrzeuglenkung dämpfen kann.

Optional kann die Modulkappe 28 ferner ein (nicht dargestelltes) Befestigungsmittel aufweisen, welches die Modulkappe 28 in der Endmontagestellung des Gassackmoduls 16 direkt mit dem Lenkrad 42 verbindet.

Im Folgenden wird schließlich noch auf die Montage des Gassackmoduls 16 am Lenkrad 42 zur Bildung der Lenkungsbaugruppe 10 eingegangen.

Hierbei wird zunächst das Gassackmodul 16 in seiner Vormontageposition gemäß Figur 6 bereitgestellt.

Ferner wird das Lenkrad 42 mit dem Lenkradskelett 44 und der am Lenkradskelett 44 befestigten Montageplatte 18 bereitgestellt. Wie in Figur 9 veranschaulicht kann die Montageplatte 18 dabei insbesondere über Schwingungsdämpfer 46 am Lenkradskelett 44 befestigt werden, sodass die Montageplatte 18 und das Lenkradskelett 44 schwingfähig verbunden sind.

Anschließend wird das Gassackmodul 16 entlang der Montageachse A in Richtung zum Lenkradskelett 44 zugeführt und gemäß Figur 7 eine axiale Montagekraft F auf die Modulkappe 28 des Gassackmoduls 16 aufgebracht, wobei zuerst die Rastmittel des Gassackmoduls 16 und der Montageplatte 18, also der Rasthaken 12 und das Federelement 14 eine Rastverbindung ausbilden und erst danach das Gassackmodul 16 von seiner Vormontageposition in seine Endmontageposition gemäß Figur 8 überführt wird.

Optional kann die Modulkappe 28 beim Überführen des Gassackmoduls 16 von der Vormontageposition in die Endmontageposition im Wesentlichen gleichzeitig direkt am Lenkrad 42 fixiert, insbesondere mit dem Lenkrad 42 verrastet werden.

## Patentansprüche

1. Lenkungsbaugruppe für eine Fahrzeuglenkung, mit
einem Lenkrad (42), das ein Lenkradskelett (44) aufweist,
einem Gassackmodul (16) für ein Insassenrückhaltesystem und
einer lenkradseitigen Montageplatte (18) zur Befestigung des Gassackmoduls (16) am Lenkradskelett (44),
wobei das Gassackmodul (16) eine Modulkappe (28) umfasst, die im eingebauten Zustand des Gassackmoduls (16) einem Insassen zugewandt ist, und einen Modulboden (30), der ein Rastmittel zur Befestigung des Gassackmoduls (16) an einem Fahrzeugbauteil aufweist,
wobei die Modulkappe (28) und der Modulboden (30) entlang einer Montageachse (A) aufeinander zu bewegbar sind, bis sie zunächst eine axiale Vormontageposition und dann eine axiale Endmontageposition erreichen,
wobei die Modulkappe (28) und der Modulboden (30) zusammenwirkende Vorfixierelemente aufweisen, welche die Modulkappe (28) und den Modulboden (30) in der Vormontageposition unverlierbar aneinander befestigen, und
wobei die Modulkappe (28) und der Modulboden (30) zusammenwirkende Widerstandskonturen aufweisen, welche bei einer axialen Relativbewegung der Modulkappe (28) und des Modulbodens (30) von der Vormontageposition in die Endmontageposition einen vorbestimmten Montagewiderstand aufweisen,
wobei das Rastmittel am Modulboden (30) des Gassackmoduls (16) ein erstes Rastmittel ist, welches bei einer axialen Bewegung relativ zur Montageplatte (18) mit einem an der Montageplatte (18) vorgesehenen zweiten Rastmittel verrastet,
**dadurch gekennzeichnet, dass** ein Montagewiderstand zum Verrasten der ersten und zweiten Rastmittel geringer ist als ein Montagewiderstand der Widerstandskonturen beim Überführen des Gassackmoduls (16) von der Vormontagestellung in die Endmontagestellung.

2. Lenkungsbaugruppe nach Anspruch 1, **dadurch gekennzeichnet, dass** die Modulkappe (28) ein Befestigungsmittel aufweist, welches die Modulkappe (28) in der Endmontagestellung des Gassackmoduls (16) direkt mit dem Lenkrad (42) verbindet.

3. Lenkungsbaugruppe nach Anspruch 1 oder 2, **dadurch gekennzeichnet, dass** die Montageplatte (18) als separates Bauteil axial zwischen dem Gassackmodul (16) und dem Lenkradskelett (44) angeordnet ist.

4. Lenkungsbaugruppe nach Anspruch 3, **dadurch gekennzeichnet, dass** die Montageplatte (18) schwingfähig am Lenkradskelett (44) befestigt ist.

5. Lenkungsbaugruppe nach einem der vorhergehenden Ansprüche, **dadurch gekennzeichnet, dass** die Modulkappe (28) und der Modulboden (30) in der Endmontageposition relativ zueinander ein axiales und radiales Spiel aufweisen.

6. Lenkungsbaugruppe nach einem der vorhergehenden Ansprüche, **dadurch gekennzeichnet, dass** die Widerstandskonturen Rastkonturen sind, welche die Modulkappe (28) und den Modulboden (30) in der Endmontageposition verrasten.

7. Verfahren zur Montage eines Gassackmoduls (16) an einem Lenkrad (42) zur Bildung einer Lenkungsbaugruppe gemäß einem der vorhergehenden Ansprüche, wobei das Verfahren folgende Verfahrensschritte umfasst:
a) Bereitstellen des Gassackmoduls (16) in seiner axialen Vormontageposition;
b) Bereitstellen des Lenkrads (42) mit einem Lenkradskelett (44) und einer am Lenkradskelett (44) befestigten Montageplatte (18) für das Gassackmodul (16);
c) Zuführen des Gassackmoduls (16) entlang der Montageachse (A) in Richtung zum Lenkradskelett (44);
d) Aufbringen einer axialen Montagekraft (F) auf die Modulkappe (28) des Gassackmoduls (16), wodurch zuerst die Rastmittel des Gassackmoduls (16) und der Montageplatte (18) eine Rastverbindung ausbilden und erst danach das Gassackmodul (16) von seiner Vormontageposition in seine Endmontageposition überführt wird.

8. Verfahren nach Anspruch 7, **dadurch gekennzeichnet, dass** die Montageplatte (18) im Schritt b) über Schwingungsdämpfer (46) am Lenkradskelett (44) befestigt wird, sodass die Montageplatte (18) und das Lenkradskelett (44) schwingfähig verbunden sind.

9. Verfahren nach Anspruch 7 oder 8, **dadurch gekennzeichnet, dass** die Modulkappe (28) beim Überführen des Gassackmoduls (16) von der Vormontageposition in die Endmontageposition im Schritt d) gleichzeitig auch direkt am Lenkrad (42) fixiert, insbesondere mit dem Lenkrad (42) verrastet wird.

## Claims

1. A steering assembly for a vehicle steering system comprising
a steering wheel (42) including a steering wheel skeleton (44),
an airbag module (16) for an occupant restraint system and
a steering wheel-side mounting plate (18) for securing the airbag module (16) to the steering wheel skeleton (44),
wherein the airbag module (16) includes a module cap (28), which in the mounted condition of the airbag module (16) faces an occupant, and a module bottom (30), which includes a latch means for securing the airbag module (16) to a vehicle component,
wherein the module cap (28) and the module bottom (30) are movable toward each other along a mounting axis (A) until they reach at first an axial pre-mounting position and then an axial final mounting position,
wherein the module cap (28) and the module bottom (30) include interacting pre-fixing elements which captively secure the module cap (28) and the module bottom (30) to each other in the pre-mounting position,
wherein the module cap (28) and the module bottom (30) have interacting resistance contours which in an axial relative movement of the module cap (28) and the module bottom (30) from the pre-mounting position to the final mounting position have a predetermined mounting resistance,
wherein the latch means on the module bottom (30) of the airbag module (16) is a first latch means which latches with a second latch means provided on the mounting plate (18) during an axial movement relative to the mounting plate (18),
**characterized in that** the mounting resistance for latching the first and second latch means is lower than a mounting resistance of the resistance contours when transferring the airbag module (16) from the pre-mounting position to the final mounting position.

2. The steering assembly according to claim 1, **characterized in that** the module cap (28) includes a securing means which in the final mounting position of the airbag module (16) connects the module cap (28) directly to the steering wheel (42).

3. The steering assembly according to claim 1 or 2, **characterized in that** the mounting plate (18) is axially arranged as a separate component between the airbag module (16) and the steering wheel skeleton (44).

4. The steering assembly according to claim 3, **characterized in that** the mounting plate (18) is secured to the steering wheel skeleton (44) in an oscillating manner.

5. The airbag module according to any one of the preceding claims, **characterized in that** in the final mounting position the module cap (28) and the module bottom (30) have axial and radial play relative to each other.

6. The airbag module according to any one of the preceding claims, **characterized in that** the resistance contours are latching contours which latch the module cap (28) and the module bottom (30) in the final mounting position.

7. A method for mounting an airbag module (16) to a steering wheel (42) for forming a steering assembly according to any one of the preceding claims, the method comprising the following method steps of:
a) providing the airbag module (16) in its axial pre-mounting position;
b) providing the steering wheel (42) including a steering wheel skeleton (44) and a mounting plate (18) secured to the steering wheel skeleton (44) for the airbag module (16),
c) feeding the airbag module (16) along the mounting axis (A) in the direction of the steering wheel skeleton (44);
d) applying an axial mounting force (F) to the module cap (28) of the airbag module (16), thus causing at first the latch means of the airbag module (16) and of the mounting plate (18) to form a latching connection and only thereafter causing the airbag module (16) to be transferred from its pre-mounting position to its final mounting position.

8. The method according to claim 7, **characterized in that** in step b) the mounting plate (18) is secured to the steering wheel skeleton (44) via vibration dampers (46) so that the mounting plate (18) and the steering wheel skeleton (44) are connected in an oscillating manner.

9. The method according to claim 7 or 8, **characterized in that** the module cap (28) is simultaneously fixed also directly on the steering wheel (42), especially latched with the steering wheel (42), when transferring the airbag module (16) from the pre-mounting position to the final mounting position in step d).

## Revendications

1. Ensemble de direction pour une direction de véhicule, comprenant
un volant de direction (42), qui présente une armature de volant de direction (44),
un module airbag (16) pour un système de retenue des occupants et
une plaque de montage (18) côté volant de direction pour la fixation du module airbag (16) sur l'armature de volant de direction (44),
pour lequel le module airbag (16) comprend un couvercle de module (28), lequel, à l'état monté du module airbag (16), est tourné vers un occupant, et une base de module (30) qui présente un moyen d'encliquetage pour la fixation du module airbag (16) sur un composant du véhicule,
pour lequel le couvercle de module (28) et la base de module (30) pouvant être déplacés l'un vers l'autre le long d'un axe de montage (A) jusqu'à ce qu'ils atteignent d'abord une position axiale de pré-assemblage et ensuite une position axiale d'assemblage final,
pour lequel le couvercle de module (28) et la base de module (30) comprennent des éléments de pré-fixation coopérants, lesquels fixent de manière non libérable le couvercle de module (28) et la base de module (30) l'un à l'autre dans la position de pré-assemblage, et
pour lequel le couvercle de module (28) et la base de module (30) ont des contours résistants coopérants, lesquels ont une résistance d'assemblage prédéterminée durant un mouvement relatif axial du couvercle de module (28) et de la base de module (30) de la position de pré-assemblage à la position d'assemblage final,
pour lequel le moyen d'encliquetage sur la base du module (30) du module airbag (16) est un premier moyen d'encliquetage qui, lors d'un mouvement axial par rapport à la plaque de montage (18), s'encliquette avec un deuxième moyen d'encliquetage prévu sur la plaque de montage (18),
**caractérisé en ce qu'**une résistance de montage pour l'encliquetage du premier et du deuxième moyen d'encliquetage est inférieure à une résistance de montage des contours résistants lors du passage du module airbag (16) de la position de pré-assemblage à la position d'assemblage final.

2. Ensemble de direction selon la revendication 1, **caractérisé en ce que** le couvercle de module (28) comprend un dispositif de fixation, lequel relie directement le couvercle de module (28) au volant (42) dans la position d'assemblage final du module airbag (16).

3. Ensemble de direction selon la revendication 1 ou 2, **caractérisé en ce que** la plaque de montage (18) est disposée comme un composant séparé axialement entre le module airbag (16) et l'armature de volant (44).

4. Ensemble de direction selon la revendication 3, **caractérisé en ce que** la plaque de montage (18) est fixée capable d'osciller sur l'armature du volant (44).

5. Ensemble de direction selon l'une des revendications précédentes, **caractérisé en ce que** le couvercle de module (28) et la base module (30) présentent un jeu axial et radial l'un par rapport à l'autre dans la position d'assemblage final.

6. Ensemble de direction selon l'une des revendications précédentes, **caractérisé en ce que** les contours résistants sont des contours d'encliquetage qui verrouillent le couvercle de module (28) et la base du module (30) dans la position d'assemblage final.

7. Procédé de montage d'un module airbag (16) sur un volant (42) pour former un ensemble de direction selon l'une quelconque des revendications précédentes, pour lequel le procédé comprend les étapes suivantes :
a) Préparer le module airbag (16) dans sa position axiale de pré-assemblage ;
b) Préparer le volant de direction (42) avec une armature de volant de direction (44) et une plaque de montage (18) fixée à l'armature du volant de direction (44) pour le module airbag (16) ;
c) Avancer le module airbag (16) le long de l'axe de montage (A) vers l'armature du volant (44) ;
d) Appliquer un effort de montage axial (F) sur le couvercle de module (28) du module airbag (16), grâce auquel les moyens de verrouillage du module airbag (16) et la plaque de montage (18) forment en premier une connexion de verrouillage et seulement ensuite le module airbag (16) passe de sa position de pré-assemblage à sa position d'assemblage final.

8. Procédé selon la revendication 7, **caractérisé en ce que**, à l'étape b), la plaque de montage (18) est fixée à l'armature de volant (44) par l'intermédiaire d'amortisseurs de vibrations (46) de sorte que la plaque de montage (18) et l'armature de volant (44) sont reliées capable d'osciller

9. Procédé selon la revendication 7 ou 8, **caractérisé en ce que**, lorsque le module airbag (16) passe de la position de pré-assemblage à la position d'assemblage final à l'étape d), le couvercle de module (28) est également fixé directement et en même temps au volant (42), en particulier verrouillé au volant (42).
